# EUROPÄISCHE PATENTSCHRIFT

(11) **EP 2 129 888 B1**
(45) Veröffentlichungstag und Bekanntmachung des Hinweises auf die Patenterteilung: **31.10.2012**
(21) Anmeldenummer: 08734619.3
(22) Anmeldetag: 14.03.2008
(51) Int. Cl.: F02B 29/04, F02M 25/07, F02M 35/112

(54) **LADEFLUIDANSAUGMODUL UND VERBRENNUNGSKRAFTMASCHINE**
CHARGING FLUID SUCTION MODULE AND INTERNAL COMBUSTION ENGINE
MODULE D'ASPIRATION DE FLUIDE DE CHARGE ET MOTEUR À COMBUSTION INTERNE

(30) Priorität: 23.03.2007 DE 102007014704
(43) Veröffentlichungstag der Anmeldung: 09.12.2009
(73) Patentinhaber: Behr GmbH & Co. KG, 70469 Stuttgart (DE)
(72) Erfinder: PANTOW, Eberhard, 71364 Winnenden (DE); FELDHAUS, Georg, 70374 Stuttgart (DE)
(74) Vertreter: Grauel, Andreas
(86) Internationale Anmeldenummer: PCT/EP2008/002077
(87) Internationale Veröffentlichungsnummer: WO 2008/116568

(56) Entgegenhaltungen:
- EP-A- 1 496 221
- EP-A- 1 533 512
- EP-A- 1 911 946
- WO-A-99/14477
- WO-A-99/15773
- WO-A-03/102396
- WO-A-2008/006604
- DE-A1- 19 853 455
- DE-A1- 19 902 504
- DE-B3-102004 025 187
- US-A- 5 269 143
- US-A1- 2006 278 377

## Beschreibung

Die Erfindung betrifft ein Ladefluidansaugmodul für eine Verbrennungskraftmaschine mit einem Gehäuse, das einen Strömungsweg für ein gasförmiges Ladefluid ausbildet, wobei im Gehäuse ein Wärmetauscher für das gasförmige Ladefluid angeordnet ist.

Ein Ladefluidansaugmodul der eingangs genannten Art dient der Zuführung der für den Verbrennungsprozess in der Verbrennungskraftmaschine notwendigen gasförmigen Ladefluide, insbesondere in Form einer Ladeluft oder eines Ladeluft-Gasgemisches, das vorzugsweise verdichtet ist.

Darüber hinaus dienen Konzepte zur Ladeluftkühlung u.a. der Reduzierung von Schadstoffen, insbesondere Stickoxiden, Im Abgas. Ein solches Konzept ist beispielsweise in US 5,269,143 beschrieben, bei dem ein als separates Bauteil ausgebildeter Wärmetauscher in Form eines Ladeluftkühlers zur Kühlung der Ladeluft vorgesehen ist.

Darüber hinaus kann eine besonders bauraumsparende Variante dadurch realisiert werden, dass - wie beim eingangs genannten Ladefluidansaugmodul - im Sammeleinlasskanal ein Wärmetauscher für das gasförmige Ladefluid, insbesondere eine Ladeluft, angeordnet ist. Ein solches Ladefluidansaugmodul ist beispielsweise in DE 10 2004 025 187 B3 beschrieben.

Bei einem darüber hinausgehenden weiteren Konzept, u. a. zur Reduzierung des Kraftstoffverbrauchs und der Schadstoffreduzierung bei einer Verbrennungskraftmaschine, - wie beispielsweise eines Dieselmotors oder eines Ottomotors - wird eine Abgasrückführung, wie beispielsweise in EP 1 496 221 A2, EP 1 533 512 A2 oder WO 03/102 396 A1 beschrieben, vorgenommen. Ein Abgas wird dabei regelmäßig mittels eines separaten, externen Wärmetauschers in Form eines Abgasrückführkühlers gekühlt. Dabei wird, ggf. abhängig vom Motorbetriebspunkt, ein Teilstrom des Abgases nach dem Motor entnommen, in einem Wärmetauscher in Form eines Abgaskühlers abgekühlt und anschließend der Ansaugluft zugemischt. Die Menge des rückführbaren Abgases ist abhängig vom Druckgefälle zwischen der Abgas- und der Frischluftseite und vom Betriebsverhalten des Motors.

So unterscheidet man beispielsweise zwischen einer Hochdruckabgasrückführung und einer Niederdruckabgasrückführung. Bei einer Hochdruckabgasrückführung erfolgt eine Abgasrückführung zwischen Leitungsabschnitten, die unter einem vergleichsweise hohen Druck stehen, beispielsweise durch eine Abgasrückführleitung, die vor einer Abgasturbine motorausgangsseitig abgeht und nach einem Verdichter motoreingangsseitig zugeht. Im Unterschied dazu erfolgt eine Niederdruckabgasrückführung regelmäßig durch eine Abgasrückführung zwischen Leitungsabschnitten, die unter einem vergleichsweise niedrigen Druck stehen, beispielsweise durch eine Abgasrockführleitung, die nach einer Abgasturbine motorausgangsseitig abgeht und vor einem Verdichter motoreingangsseitig zugeht. Die Leistung bzw. der Durchsatz einer Abgasrückführung wird in der Regel durch das förderbare Volumen (Menge) eines rückgeführten Abgases und damit über die verfügbare Druckdifferenz bestimmt. Im Falle einer Niederdrudcabgasrückführung ist regelmäßig eine Druckdifferenz - auch Spülgefälle genannt - am Verdichter maßgebend und kann für eine über einen Abgaskühler rückgeführte Abgasmenge bedarfsmäßig gesteigert werden. Im Falle einer Hochdruckabgasrückführung steht regelmäßig lediglich die Druckdifferenz zwischen einer Motorabgasseite und einer Motorfrischluftseite für den Abgasförderstrom zur Verfügung.

So erfolgt beispielsweise die Zumischung eines Abgases im Falle einer Hochdruckabgasrückführung in eine verdichtete Ladeluft üblicherweise auf der Strecke zwischen einem Ansaugrohr und einem Ladeluftkühler, wie dies beispielsweise in DE 10 2004 025 187 B3 der Fall ist.

Wünschenswert ist es, die Leistung einer Abgasrückführung zu verbessern. An dieser Stelle setzt die Erfindung an, deren Aufgabe es ist, eine Vorrichtung anzugeben, die eine bauraumsparende Ausführung und eine gesteigerte Leistungsfähigkeit einer Abgasrückführung ermöglicht

Betreffend die Vorrichtung wird die Aufgabe durch die Erfindung mit einem Ladefluidansaugmodul der eingangs genannten Art gelöst, bei dem erfindungsgemäß das Gehäuse einen Einlasskanal für ein Abgas aufweist und der Einlasskanal stromabwärts des Wärmetauschers für das gasförmige Ladefluid in den Strömungsweg mündet.

Die Erfindung geht von der Überlegung aus, dass die Position der Zumischung des Abgases mitentscheidend für das Spülgefälle bei einem eingangs genannten Ladefluidansaugmodul ist, bei dem im Gehäuse, insbesondere in einem Sammeleinlasskanal ein Wärmetauscher für das gasförmige Ladefluid, insbesondere Ladeluftkühler, angeordnet ist oder in ein Luftansaugrohr ein Wärmetauscher Integriert ist. Dabei wurde festgestellt, dass die Zuführung eines Abgases vor dem Wärmetauscher nachteilig sein kann, da in solch einem Fall das Spülgefälle zusätzlich um den ladefluidseitigen, d. h. luftseitigen Druckabfall des für das gasförmige Ladefluid, insbesondere eine Ladeluft, vorgesehenen Wärmetauschers reduziert ist. Die Erfindung hat erkannt, dass in einem solchen Fall die rückführbare Abgasmenge unnötig beschränkt ist und damit der Vorteil in der Verbrauchsreduzierung noch verbessert werden kann.

In einem ersten Schritt geht die Erfindung von einer besonders kompakten und motornahen Einheit mit kurzen Luftwegen aus, bei der ein Gehäuse, insbesondere im Sammeleinlasskanal, ein Wärmetauscher für das gasförmige Ladefluid, insbesondere eine Ladeluft oder ein Ladeluft-Gasgemisch, angeordnet ist. Dadurch wird bereits ein luftseitiger Druckverlust der Ladeluft vergleichsweise und vorteilhaft gering gehalten. Gemäß der Erkenntnis der Erfindung, dass ein am Gehäuseeingang, insbesondere im Sammeleinlasskanal, beispielsweise im Ansaugrohr für Ladeluft, herrschender Druck einen vergleichsweise großen Einfluss auf die Abgasrückführung hat, sieht das Konzept der Erfindung eine Zuführung des Abgases stromabwärts des Wärmetauschers In den Strömungsweg des gasförmigen Ladefluids vor, um ein möglichst großes Spülgefälle, d.h. eine möglichst große Druckdifferenz, zwischen der Abgas- und der Frischluftseite eines Motors zu erreichen und damit eine möglichst große Druckdifferenz für eine Abgasrückführung zur Verfügung zu stellen. Andernfalls wäre - wie im Stand der Technik - das Spülgefälle um den luftseitigen Druckabfall des Wärmetauschers für das gasförmige Ladefluid reduziert.

Zusätzlich wird durch das Konzept der Erfindung die Problematik der Kühlerverschmutzung, der Temperaturbelastung und einer Korrosion weitestgehend gemindert.

Die Erfindung führt auch auf ein Abgasrückführsystem, insbesondere ein Hochdruckabgasrückführsystem, mit einem Ladefluidansaugmodul gemäß dem Konzept der Erfindung. Es hat sich darüber hinaus gezeigt, dass die Verwendung des Ladefluidansaugmoduls bei einem Hochdruckabgasrückführsystem besonders vorteilhaft ist, da, wie eingangs erläutert, für ein Hochdruckabgasrückführsystem nicht In jedem Fall druckdifferenzsteigemde Komponenten zur Verfügung stehen, sondern die verfügbare Druckdifferenz durch einen motorausgangsseitigen und einen motoreingangsseitigen Druck festgelegt ist. Diese wird gemäß dem Konzept der Erfindung möglichst gut ausgenutzt, was mit dem oben erläuterten Ladefluidansaugmodul erreicht wird.

Die Erfindung führt auch auf eine Verbrennungskraftmaschine mit einem Ladefluidansaugmodul gemäß dem Konzept der Erfindung.

Vorteilhafte Weiterbildungen der Erfindung sind den Unteransprüchen zu entnehmen und geben im einzelnen vorteilhafte Möglichkeiten an, das oben erläuterte Konzept im Rahmen der Aufgabenstellung, sowie hinsichtlich weiterer Vorteile zu realisieren.

Vorzugsweise weist das Ladefluidansaugmodul einen Sammeleinlasskanal für das gasförmige Ladefluid auf. Vorzugsweise, zusätzlich oder alternativ, weist das Ladefluidansaugmodul eine Anzahl von den Zylindern der Verbrennungskraftmaschine zugeordnete Einzelansaugkanäle auf, über die das gasförmige Ladefluid den Zylindern der Verbrennungskraftmaschine zuführbar ist. Ein solches Modul wird auch als Einlasskrümmer bezeichnet.

Vorzugsweise ist eine Drosselklappe oder ein anderes druckmindemdes Element vor dem Wärmetauscher für das gasförmige Ladefluidansaugmodul angeordnet. Insbesondere ist eine Drosselklappe zwischen einem Ansaugrohr und dem Sammeleinlasskanal angeordnet. Durch die Drosselklappe kann vorteilhaft das vorhandene Spülgefälle, welches durch die Druckdifferenz zwischen Entnahmestelle auf der Abgasseite und im Frischluftpfad bestimmt ist, weiter vergrößert werden. Dies ist bei der Verwendung bei einer Verbrennungskraftmaschine in Form eines Dieselmotors besonders vorteilhaft und hat sich darüber hinaus auch im Rahmen der Verwendung bei einem Ottomotor als mit Vorzügen versehen erwiesen. Insbesondere ist die Drosselklappe gemäß der Weiterbildung am Lufteintritt, d.h. am Ende des Ansaugrohrs für das gasförmige Ladefluid und vor dem Sammeleinlasskanal angeordnet. Zusätzlich oder alternativ kann eine Drosselklappe oder ein anderes druckminderndes oder regelndes Element im Ladefluidansaugmodul integriert sein und vor oder nach dem Wärmetauscher angeordnet sein.

Ein Wärmetauscher für das gasförmige Ladefluid oder das Abgas kann grundsätzlich in vielfältiger Form gebildet sein - sowohl konstruktiv als auch hinsichtlich der Auslegung mit Kühlmitteln. Beispielsweise hat sich ein Luft/Wasser-Wärmetauscher als besonders vorteilhaft erwiesen. Als Kühlmittel können jedoch auch andere Medien als Wasser, zum Beispiel geeignete Kältemittel verwendet werden. So kann ein Wärmetauscher darüber hinaus in konstruktiver Ausgestaltung Strömungskanäle in bedarfsmäßig unterschiedlichster Form - sei es für das gasförmige Ladefluid/Abgas oder das Kühlmittel - aufweisen, die beispielsweise als, z. B. flache oder eckige, rohrförmige Strömungskanäle gebildet sind oder auch in Form von mit Scheiben zusammengesetzten Strömungskanälen gebildet sind. Der Wärmetauscher kann darüber hinaus in vorteilhafter Anordnung strömungs-, turbulenz- oder andere wärmeübertragungverbessernde Elemente aufweisen. Der Wärmetauscher - für das gasförmige Ladefluid oder das Abgas - kann in I-Flow - oder U-Flow-Bauweise ausgebildet sein. Er kann ein- oder zweistufig ausgebildet sein. Insbesondere auch in zweistufiger Ausführung, beispielsweise als Niedertemperatur- und Hochtemperaturstufe, kann der Wärmetauscher einen Bypass-Kanal aufweisen zur Überbrückung des Wärmetauschers und/oder einer ggf. einer beliebigen Stufe desselben.

Grundsätzlich eignet sich im Rahmen des Konzepts der Erfindung jede, auch in konstruktiver Hinsicht, vorteilhafte Stelle zur Anordnung der Mündung des Einlasskanals für das Abgas stromabwärts des Wärmetauschers im Strömungsweg des gasförmigen Ladefluids. So ist es beispielsweise gemäß einer besonders bevorzugten Weiterbildung vorteilhaft, dass der Einlasskanal für das Abgas in den Sammeleinlasskanal mündet. Darüber hinaus hat sich gemäß dem Konzept der Erfindung grundsätzlich gezeigt, dass es vorteilhaft sein kann, das Volumen der mit rückgeführtem Abgas angereicherten Ansaugluft möglichst gering zu halten. Dadurch kann in vorteilhafter Weise die Verbrennungsstabilität im Motor auch bei schnellen Lastwechseln vergleichsweise wenig beeinträchtigt werden. So kann gemäß einer weiteren besonders vorteilhaften Weiterbildung der Erfindung der Einlasskanal für das Abgas unmittelbar vor den Einzelansaugkanälen in den Strömungsweg münden.

Darüber hinaus hat sich gezeigt, dass sich unter anderem ein besonders geringes Gasvolumen im Sinne der oben genannten Weiterbildung dadurch ergibt, wenn eine möglichst späte Anordnung der Mündungsstelle zwischen dem Wärmetauscher für das gasförmige Ladefluid, insbesondere einem Ladeluftkühler, und den Einlassventilen an einem Zylinder vorgesehen ist. Unter diesem Aspekt auch grundsätzlich hat sich insbesondere als vorteilhaft erwiesen, dass der Einlasskanal für das Abgas in einem Einzelansaugkanal in den Strömungsweg mündet. Dadurch erfolgt die Zumischung des Abgases praktisch so spät wie möglich.

Gemäß einer besonders bevorzugten Weiterbildung der Erfindung weist der Einlasskanal für das Abgas eine Anzahl von den Einzelansaugkanälen jeweils zugeordnete Öffnungen auf, die jeweils in einen oder bei einem Einzelansaugkanal in den Strömungsweg münden. Mit anderen Worten, können beispielsweise mehrere Einlasskanäle von einem gemeinsamen Einlasskanal für das Abgas abgehen oder es kann ein Einlasskanal Öffnungen aufweisen, die jeweils in einem Einzelansaugkanal in den Strömungsweg münden. In besonders bevorzugter Weise sind wenigstens zwei Öffnungen mit unterschiedlicher Größe oder Form versehen. Die Größen oder Formen sind vorzugsweise derart, dass ein Abgas auf die Anzahl von Zylinder gleich verteilt zuführbar ist. Beispielsweise kann abhängig von der Position des Anschlusses des Einlasskanals eine gleichmäßige Zuteilung des Abgases auf alle Zylinder der Verbrennungskraftmaschine vorgesehen sein. In besonders bevorzugter Weise kann der Einlasskanal für das Abgas in Form einer Verteilerleiste gebildet sein und/oder eine oder mehrere Verteilerleisten aufweisen, die vorzugsweise im Mündungsbereich angeordnet sind.

Vorzugsweise können Mischelemente, z. B. am Mündungsbereich, die Zumischung des Abgases unterstützen bzw. druckgünstig gemäß dem Konzept der Erfindung gestalten. Beispielsweise eignet sich eine Düse, z. B. eine Ventildüse oder Mischflügel oder permeable Elemente, die im Strömungsweg angeordnet sind.

Gemäß einer weiterbildenden ersten Variante der Erfindung ist dem Ladefluidansaugmodul ein Wärmetauscher für das Abgas zugeordnet. Vorzugsweise ist der Wärmetauscher für das Abgas als unabhängiges Bauteil vom Ladefluidansaugmodul angeordnet. In Bezug auf die oben genannte Weiterbildung lässt sich vor allem auch die Gleichverteilung des Abgases auf die Zylinder, beispielsweise durch unterschiedlich große Öffnungen in den jeweiligen Abgasrückführkanälen abhängig von der relativen Position des Anschlusses der Abgasleitung vom Abgasrückführkühler erreichen, gegebenenfalls auch vom vorerwähnten Druckabfall im Einlasskanal, beispielsweise vom Druckabfall in der Verteilleiste.

Gemäß einer weiterbildenden zweiten Variante ist im Gehäuse, insbesondere im Einlasskanal für das Abgas, ein Wärmetauscher für das Abgas angeordnet. Dadurch kann, bei Bedarf, zusätzlicher Bauraum für einen Wärmetauscher gemäß der ersten Variante eingespart werden. Vorzugsweise ist der Wärmetauscher für das Abgas im Gehäuse derart angeordnet, dass der Strömungsweg des Abgases vom Wärmetauscher zum Einlasskanal innerhalb des Gehäuses verläuft. Dies vereinfacht den Verbindungsaufwand.

In einer besonders bevorzugten Weiterbildung der zweiten Variante ist der Wärmetauscher für das gasförmige Ladefluid und ein Wärmetauscher für das Abgas als ein gemeinsames Wärmetauschermodul gebildet. Dadurch lässt sich nochmals ein Bauraumbedarf verringern und darüber hinaus der Wärmetauscher als gemeinsames Modul für Ladeluft und Abgas besonders vorteilhaft und kosteneffektiv aufbauen.

Vorzugsweise ist das Gehäuse als ein Gussteil, insbesondere als ein Spritzgussteil gebildet. Als Materialien eignen sich vorzugsweise Kunststoff und/oder Aluminium oder Verbindungen daraus. Insbesondere eignet sich ein Gehäuse als ein Spritzgussteil aus Aluminium.

Besonders vorteilhaft bei der Verwendung von Aluminium als Material ist die Eignung des Gehäuses zur weiteren Integration des oder der Wärmetauscher/s. Gemäß einer besonders bevorzugten Weiterbildung der Erfindung können ein oder mehrere Strömungskanäle des oder der Wärmetauscher/s wenigstens teilweise als integraler Teil des Gehäuses gebildet sein. Grundsätzlich lässt sich diese weitere Integration jedoch auch mit anderen Materialien als Aluminium erreichen.

Vorzugsweise ist das Gehäuse als ein mehrteiliges Gehäuse gebildet, insbesondere mit einem separaten Gehäuseteil für einen Sammeleinlasskanal und ein separates Gehäuseteil für einen Einzelansaugkanal. Darüber hinaus eignen sich, je nach Bedarf, ausgebildete zusätzliche oder alternative Gehäuseausformungen. Als besonders kosteneffektiv hat sich ein einteiliges Gehäuse erwiesen.

Das Konzept der Erfindung hat insgesamt den Vorteil einer verbesserten Zuführung und Verteilung insbesondere gekühlter Abgase. Die Rückführung lässt sich wie zuvor erläuterte, besonders kostengünstig beispielsweise durch Ausformen einer Verteilerleiste, z.B. im Deckel des Ladefluidansaugmodul realisieren. Durch die zuvor erläuterte weitergehende Integration eines Wärmetauschers für das Abgas, insbesondere eines Abgasrückführkühlers, gemäß der zweiten Variante, entsteht eine kompakte Einheit aus Sammeleinlasskanal, gegebenenfalls mit Ansaugrohr, Wärmetauscher für das gasförmige Ladefluid und Wärmetauscher für das Abgas. Dies verringert die Anzahl der Schnittstellen zwischen den Komponenten und reduziert darüber hinaus eine Einbauarbeit im Motorraum. Darüber hinaus können über eine gemeinsame Fertigung von Luftführung und Wärmetauscher - wie erläutert einzeln oder kombiniert - erhebliche Kostensenkungen erreicht werden.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Die Zeichnung zeig im Einzelnen in
- Fig. 1:: ein Luftansaugmodul gemäß einer ersten besonders bevorzugten Ausführungsform eines Ladefluidansaugmoduls, mit integrierter Abgasrückführverteilerleiste und Abgaszuführung, die stromabwärts nach dem Wärmetauscher für die Ladeluft In den Strömungsweg mündet;
- Fig. 2:: eine Schnittansicht des Luftansaugmoduls in Fig. 1;
- Fig. 3:: eine zweite besonders bevorzugte Ausführungsform eines Ladefluidansaugmoduls in Form eines Luftansaugmoduls mit integriertem Abgasrückführkühler und Abgasrückführverteilerleiste, wobei wiederum die Zuführung des Abgases stromabwärts des Wärmetauschers für die Ladeluft in den Strömungsweg mündet;
- Fig. 4:: eine Schnittansicht der Ausführungsform von Fig. 3.

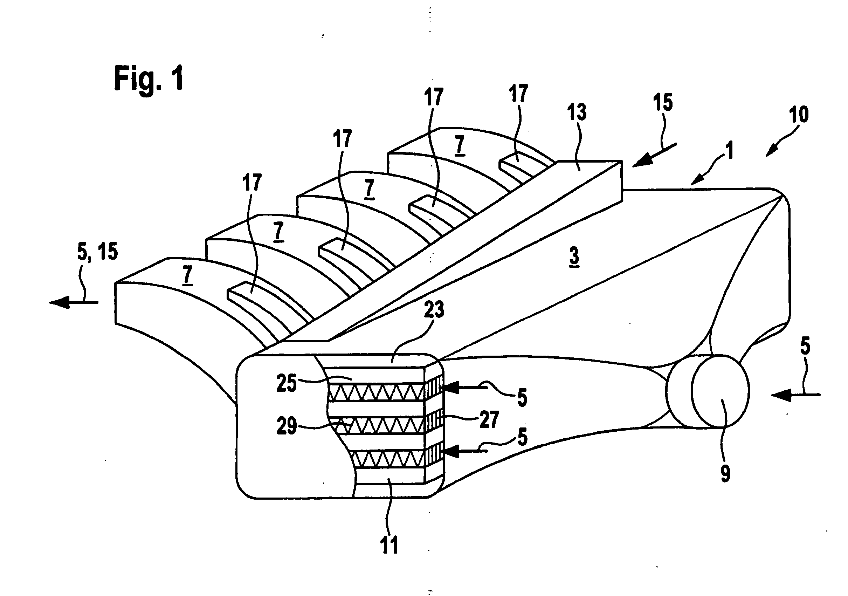

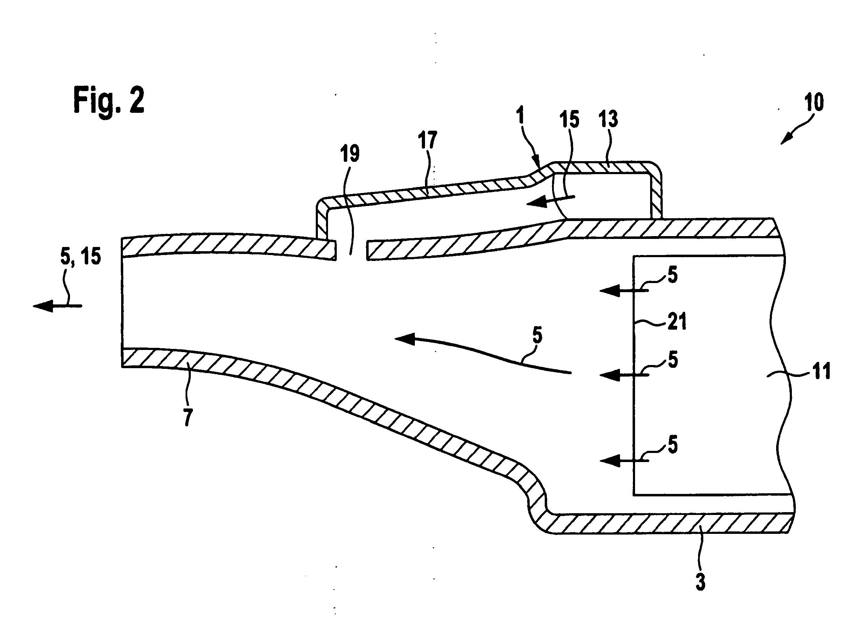

Fig. 1 zeigt ein Ladefluidansaugmodul in Form eines Ladeluft- bzw. Luftansaugmoduls 10 für eine nicht näher dargestellte Verbrennungskraftmaschine gemäß einer ersten bevorzugten Ausführungsform der Erfindung. Das in Fig. 2 im Schnitt dargestellte Luftansaugmodul 10 weist als Teil eines Gehäuses 1 einen Sammeleinlasskanal 3 für ein Ladefluid in Form einer Ladeluft 5 und eine Anzahl von den nicht näher dargestellten Zylindern der Verbrennungskraftmaschine zugeordnete Einzelansaugkanäle 7 auf, die auch als Einlasskrümmer bezeichnet werden. Über den Einlasskrümmer wird die Ladeluft 5 den Zylindern der Verbrennungskraftmaschine zugeführt. Der durch Pfeile beispielhaft gekennzeichnete Strömungsweg der Ladeluft 5 im Gehäuse 1 führt eingangsseitig von einem nicht näher dargestellten Ansaugstutzen über eine schematisch dargestellte Drosselklappe 9 in den Sammeleinlasskanal 3, durch den schematisch dargestellten integrierten Wärmetauscher in Form eines Ladeluftkühlers 11 in die Einzelansaugkanäle 7 des Einlasskrümmers und schließlich zu den Zylindern der Verbrennungskraftmaschine.

Das Luftansaugmodul 10 ist vorliegend zur Verwendung in einem Hochdruckabgasrückführkreislauf vorgesehen, eignet sich jedoch grundsätzlich auch zur Einbindung in ein Niederdruckabgasrückführsystem. Wie eingangs erläutert, hat es sich insbesondere bei einem Hochdruckabgasrückführsystem als vorteilhaft erwiesen, die zur Verfügung stehende Druckdifferenz, auch Spülgefälle genannt, zwischen einem motorausgangsseitigen Hochdruckbereich und einem motoreingangsseitigen Hochdruckbereich möglichst gut auszunutzen. Das wird bei der in Fig. 1 und Fig. 2 dargestellten Ausführungsform durch eine Abgasrückführung erreicht, welche im Rahmen des Gehäuses 1 einen Einlasskanal 13 für das Abgas 15 vorsieht, wobei der Einlasskanal 13 stromabwärts des Wärmetauschers 11 für die Ladeluft in den durch Pfeile beispielhaft dargestellten Strömungsweg der Ladeluft 5 mündet. Der Einlasskanal 13 weist vorliegend eine im Mündungsbereich angeordnete Verteilerleiste 17 auf, welche wiederum eine Mündung 19 zum vorgenannten Strömungsweg hat. Konkret ist in Fig. 2 dargestellt, dass die Mündung 19 stromabwärts des Ausgangs 21 des Wärmetauschers 11 angeordnet ist.

Insbesondere wird bei der in Fig. 1 und Fig. 2 dargestellten Ausführungsform der Einlasskanal 13 für das Abgas 15 mittels der Verteiterleiste 17 derart verlängert, dass die Mündung 19 an einem Einzelansaugkanal 7 des Einlasskrümmers angeordnet ist, so dass gemäß der vorliegenden Ausführungsform die Zumischung des Abgases 15 zur Ladeluft vergleichsweise spät erfolgt, nämlich praktisch erst direkt in den zu den nicht näher dargestellten Zylindern führenden Einzelansaugkanälen 7.

Entlang des Verlaufs des Einlasskanals 13 ist bei der vorliegenden Ausführungsform berücksichtigt, dass ein Druckabfall vorhanden ist. Um unter Berücksichtigung des Druckabfalls eine möglichst gleichverteilte Zuführung des Abgases zu den Zylindern zu ermöglichen, nimmt die Öffnungsgröße einer Mündung 19 in Richtung des Strömungswegs des Abgases 15 - mit abfallendem Druck - zu, ist also bei der im Eingangsbereich des Einlasskanals 13 angeordneten Verteilerleiste 17 am kleinsten ist und bei der endseitigen, in Fig. 1 zuvordersten Mündung 19 der zuvorderst zu sehenden Verteilerleiste 17, am größten. Zusätzlich lässt sich Form und Ausgestaltung der Öffnungen zweckmäßig gestalten, um unter dem obigen Gesichtspunkt und zusätzlich eine gute Vermischung von Abgas und Luft zu erreichen. Gemäß der Ausführungsform in Fig. 1 und Fig. 2 wird nicht nur eine besonders bauraumsparende Ausführungsform eines Ladeluftansaugmoduls mit integriertem Ladeluftkühler zur Verfügung gestellt, sondern darüber hinaus ist die zwischen Motorausgangsseite und Motoreingangsseite zur Verfügung stehende Druckdifferenz in besonders vorteilhafter Weise praktisch vollständig durch die vergleichsweise späte Anordnung der Mündungsöffnung 19 im Strömungsweg der Ladeluft 5 ausgenutzt. Zusätzlich kann die Drosselklappe 9 zwischen Ansaugrohr und Sammeleinlasskanal 3 im Pfad der Ladeluft 5 genutzt werden, um den Druckabfall für die Ladeluft 5 zu vergrößern und damit das Spülgefälle für das Abgas 15 zu erhöhen.

Der Wärmetauscher 11 in Form des Ladeluftkühlers ist vorliegend in Fig. 1 und Fig. 2 symbolisch und beispielhaft dargestellt und kann grundsätzlich in unterschiedlichster Form, je nach Verwendungsbereich, realisiert werden. Er weist zum Wärmetausch zwischen der Ladeluft 5 und einem nicht näher dargestellten Kühlfluid, vorliegend in Form eines wasserbasierten Kühlmittels einen Block auf, der zu voneinander getrennten und wärmetauschenden Führung der Ladeluft 5 und des Kühlmittels ausgelegt ist. Der Block hat ein Gehäuse 23 mit einer von dem Kühlmittel durchströmbaren Kammer 25 und in der Kammer 25 angeordneten Strömungskanälen 27 für die Ladeluft. Die voneinander getrennte Führung des Kühlmittels und der Ladeluft 5 in der Kammer 25 bzw. in den Strömungskanälen 27 führt zu einem gegebenenfalls durch Turbulenz- oder Leitelementen 29 vorteilhaft verbesserten Wärmetausch zwischen der Ladeluft 5 und dem Kühlmittel. Die Zuführung und Abführung der Ladeluft 5 zum Wärmetauscher 11 kann wie dargestellt, in Richtung des Strömungsweges der Ladeluft 5 erfolgen. Abwandlungen können auch eine seitliche Anströmung des Wärmetauschers, je nach Bedarf, quer zum dargestellten Strömungsweg vorsehen.

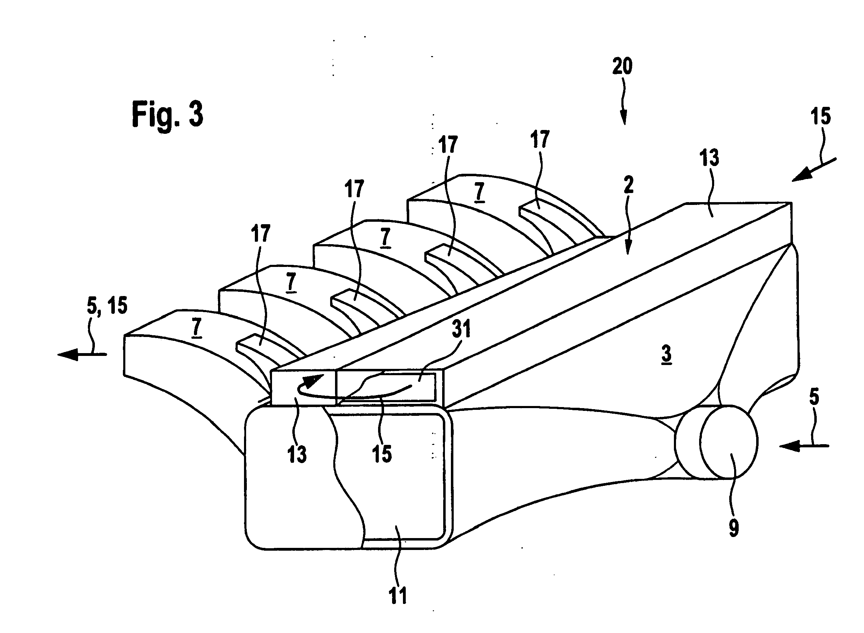

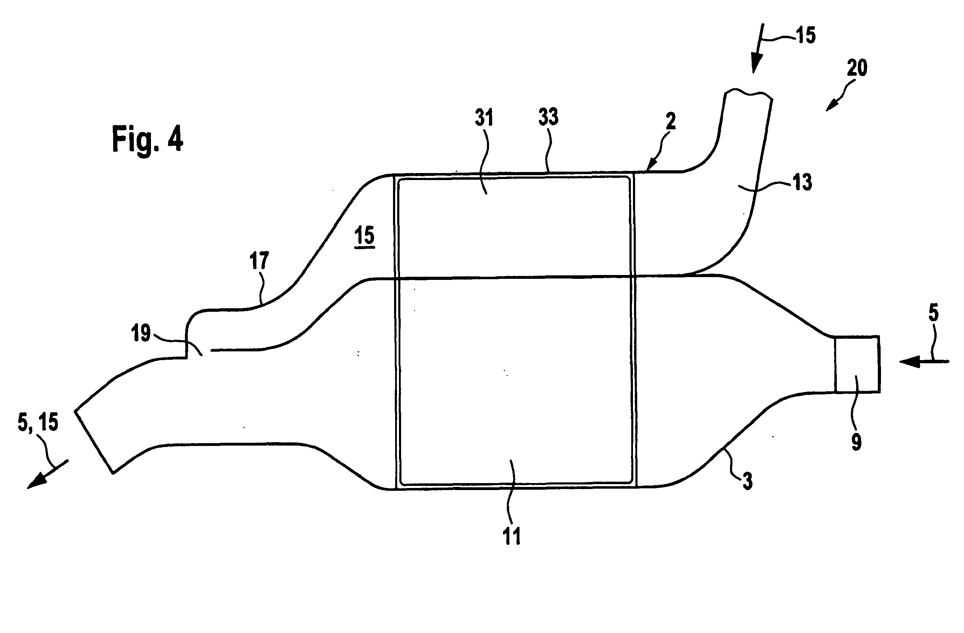

Fig. 3 zeigt in einer perspektivischen Ansicht und Fig. 4 in einer entsprechenden Schnittansicht eine besonders bevorzugte zweite Ausführungsform eines Luftansaugmoduls 20, bei dem für gleiche Teile oder Teile mit gleicher Funktion gleiche Bezugszeichen wie in Fig. 1 und Fig. 2 benutzt sind.

Das im übrige Aufbau und funktionsgleiche Luftansaugmodul 20 weist im Unterschied zu der in Fig. 1 und Fig. 2 dargestellten Ausführungsform - mit dort extern und separat vom Luftansaugmodul 10 vorgenommenen Abgaskühlung - einen ebenfalls im Gehäuse 2 untergebrachten und im Einlasskanal 13 für das Abgas 15 angeordneten Abgaskühler 31 auf, der bei dieser Ausführungsform, zusammen mit dem Ladeluftkühler 11 ein gemeinsames Wärmetauschermodul 33 bildet. Dazu ist der Abgaskühler 31 und der Ladeluftkühler 11 jeweils als eine Kühlersektion des gemeinsamen Wärmetauschermoduls 33 gebildet, wobei die Kühlersektion des Abgaskühlers 31 im Bereich des Einlasskanals 13 für das Abgas 15 angeordnet ist, während die Kühlersektion des Ladeluftkühlers im Strömungsbereich der Ladeluft 5 im Sammeleinlasskanal 3 des Luftansaugmoduls 20 angeordnet ist.

Durch die in der zweiten Ausführungsform realisierte weitergehende Integration des Abgaskühlers entsteht somit eine besonders kompakte Einheit aus dem nicht dargestellten Ansaugrohr, dem Sammeleinlasskanal 3, dem Ladeluftkühler 11 und dem Abgaskühler 31. Dies reduziert erheblich die Anzahl der Schnittstellen zwischen den genannten Komponenten und die Einbauarbeit wird erheblich erleichtert. Darüber hinaus erlaubt die gemeinsame Fertigung des Luftansaugmoduls 20 zusammen mit dem Wärmetauschermodul 33 eine erhebliche Kostensenkung bei der Herstellung.

Zusammenfassend betrifft die Erfindung ein Ladefluidansaugmodul 10, 20 für eine Verbrennungskraftmaschine mit einem Gehäuse 1, 2, das einen Strömungsweg für ein gasförmiges Ladefluid 5, insbesondere eine Luft, ein Gas und/oder ein Luft-Gasgemisch, ausgebildet; und einen Sammeleinlasskanal 3 für das gasförmige Ladefluid 5 aufweist; wobei im Sammeleinlasskanal 3 ein Wärmetauscher 11 für das gasförmige Ladefluid 5 angeordnet ist. Um eine verbesserte Abgasrückführung zu ermöglichen, ist gemäß dem Konzept der Erfindung vorgesehen, dass das Gehäuse 1, 2 einen Einlasskanal 13 für ein Abgass 15 aufweist und der Einlasskanal 13 stromabwärts des Wärmetauschers 11 für das gasförmige Ladefluid 5 in den Strömungsweg mündet.

## Patentansprüche

1. Ladefluidansaugmodul (10, 20) für eine Verbrennungskraftmaschine mit einem Gehäuse (1, 2), das einen Strömungsweg für ein gasförmiges Ladefluid (5), insbesondere eine Luft, ein Gas und/oder ein Luft-Gasgemisch, ausbildet, wobei im Gehäuse (1, 2) ein Wärmetauscher (11) für das gasförmige Ladefluid (5) angeordnet ist, das Gehäuse (1, 2) einen Einlasskanal (13) für ein Abgas (15) aufweist und der Einlasskanal (13) stromabwärts des Wärmetauschers (11) für das gasförmige Ladefluid (5) in den Strömungsweg mündet, wobei ein Sammeleinlasskanal (3) für das gasförmige Ladefluid und eine Anzahl von Zylindern der Verbrennungskraftmaschine zugeordnete Einzelansaugkanäle (7) vorgesehen sind, über die das gasförmige Ladefluid (5) den Zylindern der Verbrennungskraftmaschine zuführbar ist, wobei eine Drosselklappe (9) vor dem Wärmetauscher (11) für das gasförmige Ladefluid angeordnet ist, zwischen einem Ansaugrohr und einem Sammeleinlasskanal (3) und im Gehäuse (1, 2) integriert, **dadurch gekennzeichnet, dass** der Einlasskanal eine im Mündungsbereich angeordnete Verteilerleiste (17) aufweist, welche eine Mündung (19) zum Strömungsweg stromabwärts des Ausgangs des Wärmetauschers (11) aufweist.

2. Ladefluidansaugmodul (10, 20) nach Anspruch 1, **dadurch gekennzeichnet, dass** der Einlasskanal (13) für das Abgas (15) in den Sammeleinlasskanal (3) mündet.

3. Ladefluidansaugmodul (10, 20) nach einem der Ansprüche 1 bis 2, **dadurch gekennzeichnet, dass** der Einlasskanal (13) für das Abgas (15) unmittelbar vor den Einzelansaugkanälen (7) in den Strömungsweg mündet.

4. Ladefluidansaugmodul (10, 20) nach einem der Ansprüche 1 bis 3, **dadurch gekennzeichnet, dass** der Einlasskanal (13) für das Abgas (15) bei einem Einzelansaugkanal (7) in den Strömungsweg mündet.

5. Ladefluidansaugmodul (10, 20) nach einem der Ansprüche 1 bis 4, **dadurch gekennzeichnet, dass** der Einlasskanal (13) für das Abgas (15) eine Anzahl von den Einzelansaugkanälen (7) jeweils zugeordnete Öffnungen aufweist, von denen vorzugsweise jeweils eine bei einem Einzelansaugkanal (7) in den Strömungsweg mündet.

6. Ladefluidansaugmodul (10, 20) nach einem der Ansprüche 1 bis 5, **dadurch gekennzeichnet, dass** wenigstens zwei Öffnungen des Einlasskanals (13) unterschiedliche Größen und/oder Formen aufweisen, insbesondere Größen und/oder Formen derart gebildet sind, dass ein Abgas (15) auf die Anwahl von Zylindern gleichverteilt zuführbar ist.

7. Ladefluidansaugmodul (20) nach einem der Ansprüche 1 bis 6, **dadurch gekennzeichnet, dass** im Gehäuse (1, 2), insbesondere im Einlasskanal (13) für das Abgas (15) ein Wärmetauscher (31) für das Abgas (15) angeordnet ist.

8. Ladefluidansaugmodul (20) nach einem der Ansprüche 1 bis 7, **dadurch gekennzeichnet, dass** der Wärmetauscher (11) für das gasförmige Ladefluid (5) und ein Wärmetauscher (31) für das Abgas (15) in einem gemeinsamen Wärmetauscher-Modul (33) angeordnet sind.

9. Ladefluidansaugmodul (10, 20) nach einem der Ansprüche 1 bis 8, **dadurch gekennzeichnet, dass** das Gehäuse (1, 2) als ein Gussteil, insbesondere als ein Spritzgussteil, vorzugsweise aus Kunststoff und/oder Aluminium gebildet ist.

10. Ladefluidansaugmodul (10, 20) nach einem der Ansprüche 1 bis 9, **dadurch gekennzeichnet, dass** Strömungskanäle (27) des oder der Wärmetauscher (11, 31, 33) wenigstens teilweise als integraler Teil des Gehäuses (1, 2) gebildet sind.

11. Ladefluidansaugmodul (10, 20) nach einem der Ansprüche 1 bis 10, **dadurch gekennzeichnet, dass** das Gehäuse (1, 2) als ein mehrteiliges Gehäuse, insbesondere mit einem separaten Gehäuseteil für einen Sammeleinlasskanal (3) und einem separaten Gehäuseteil für einen Einzelansaugkanal (7) gebildet ist.

12. Ladefluidansaugmodul (10, 20) nach einem der Ansprüche 1 bis 11, **dadurch gekennzeichnet, dass** das Gehäuse (1, 2) einteilig gebildet ist.

13. Abgasrückführsystem, insbesondere Hochdruckabgasrückführsystem, mit einem Ladefluidansaugmodul (10, 20) nach einem der Ansprüche 1 bis 12.

14. Verbrennungskraftmaschine mit einem Ladefluidansaugmodul (10, 20) nach einem der Ansprüche 1 bis 12.

## Claims

1. A charging fluid intake module (10, 20) for an internal combustion engine, comprising a housing (1, 2), which forms a flow path for a gaseous charging fluid (5), in particular an air, a gas and/or an air/gas mixture, wherein a heat exchanger (11) for the gaseous charging fluid (5) is arranged in the housing (1, 2), the housing (1, 2) has an inlet duct (13) for an exhaust gas (15), and the inlet duct (13) discharges into the flow path downstream of the heat exchanger (11) for the gaseous charging fluid (5), wherein a collecting inlet duct (3) for the gaseous charging fluid and a number of individual intake ducts (7) assigned to the cylinders of the internal combustion engine are provided, via which the gaseous charging fluid (5) can be fed to the cylinders of the internal combustion engine, wherein a throttle valve (9) is arranged ahead of the heat exchanger (11) for the gaseous charging fluid and is integrated between an intake pipe and a collecting inlet duct (3) as well as in the housing (1, 2), **characterized in that** the inlet duct has a distributor strip (17) arranged in the discharge region, said distributor strip having a discharge (19) to the flow path downstream of the outlet of the heat exchanger (11).

2. The charging fluid intake module (10, 20) according to claim 1, **characterized in that** the inlet duct (13) for the exhaust gas (15) discharges into the collecting inlet duct (3).

3. The charging fluid intake module (10, 20) according to one of claims 1 to 2, **characterized in that** the inlet duct (13) for the exhaust gas (15) discharges into the flow path directly ahead of the individual intake ducts (7).

4. The charging fluid intake module (10, 20) according to one of claims 1 to 3, **characterized in that** the inlet duct (13) for the exhaust gas (15) discharges into the flow path at an individual intake duct (7).

5. The charging fluid intake module (10, 20) according to one of claims 1 to 4, **characterized in that** the inlet duct (13) for the exhaust gas (15) has a number of openings each assigned to the individual intake ducts (7), one of said openings preferably discharging into the flow path at an individual intake duct (7) in each case.

6. The charging fluid intake module (10, 20) according to one of claims 1 to 5, **characterized in that** at least two openings in the inlet duct (13) are of different size and/or shape, and in particular are of sizes and shapes formed in such a way that an exhaust gas (15) can be fed to the number of cylinders in a uniformly distributed manner.

7. The charging fluid intake module (20) according to one of claims 1 to 6, **characterized in that** a heat exchanger (31) for the exhaust gas (15) is arranged in the housing (1, 2), in particular in the inlet duct (13) for the exhaust gas (15).

8. The charging fluid intake module (20) according to one of claims 1 to 7, **characterized in that** the heat exchanger (11) for the gaseous charging fluid (5) and a heat exchanger (31) for the exhaust gas (15) are arranged in a common heat exchanger module (33).

9. The charging fluid intake module (10, 20) according to one of claims 1 to 8, **characterized in that** the housing (1, 2) is formed as a cast part, in particular as an injection moulded part, preferably made of plastic and/or aluminium.

10. The charging fluid intake module (10, 20) according to one of claims 1 to 9, **characterized in that** flow ducts (27) of the heat exchanger(s) (11, 31, 33) are formed as an integral part of the housing (1, 2), at least in part.

11. The charging fluid intake module (10, 20) according to one of claims 1 to 10, **characterized in that** the housing (1, 2) is formed as a multi-part housing, in particular having a separate housing part for a collecting inlet duct (3) and a separate housing part for an individual intake duct (7).

12. The charging fluid intake module (10, 20) according to one of claims 1 to 11, **characterized in that** the housing (1, 2) is formed in one part.

13. An exhaust gas return system, in particular a highpressure exhaust gas return system, comprising a charging fluid intake module (10, 20) according to one of claims 1 to 12.

14. An internal combustion engine, comprising a charging fluid intake module (10, 20) according to one of claims 1 to 12.

## Revendications

1. Module d'aspiration de fluide de suralimentation (10, 20) pour un moteur à combustion interne, comprenant un boîtier (1, 2) qui forme une trajectoire d'écroulement pour un fluide de suralimentation gazeux (5), en particulier de l'air, un gaz et / ou un mélange de gaz et d'air, où un échangeur de chaleur (11) prévu pour le fluide de suralimentation gazeux (5) est disposé dans le boîtier (1, 2), où le boîtier (1, 2) présente un conduit d'entrée (13) prévu pour des gaz d'échappement (15), et le conduit d'entrée (13) débouche dans la trajectoire d'écoulement, en aval de l'échangeur de chaleur (11) prévu pour le fluide de suralimentation gazeux (5), où il est prévu un conduit d'entée collecteur (3) pour le fluide de suralimentation gazeux et un certain nombre de conduits d'aspiration individuels (7) associés aux cylindres du moteur à combustion interne, conduits d'aspiration individuels par lesquels le fluide de suralimentation gazeux (5) peut être fourni aux cylindres du moteur à combustion interne, où un volet d'étranglement (9) est disposé en amont de l'échangeur de chaleur (11) prévu pour le fluide de suralimentation gazeux et intégré, dans le boîtier (1, 2), entre un tube d'aspiration et un conduit d'entrée collecteur (3), **caractérisé en ce que** le conduit d'entrée présente, disposée dans la zone de débouché, une barrette de répartition (17) qui, en aval de la sortie de l'échangeur de chaleur (11), présente un débouché (19) donnant sur la trajectoire d'écoulement.

2. Module d'aspiration de fluide de suralimentation (10, 20) selon la revendication 1, **caractérisé en ce que** le conduit d'entrée (13) prévu pour les gaz d'échappement (15) débouche dans le conduit d'entrée collecteur (3).

3. Module d'aspiration de fluide de suralimentation (10, 20) selon l'une des revendications 1 ou 2, **caractérisé en ce que** le conduit d'entrée (13) prévu pour les gaz d'échappement (15) débouche dans la trajectoire d'écoulement, directement en amont des conduits d'aspiration individuels (7).

4. Module d'aspiration de fluide de suralimentation (10, 20) selon l'une quelconque des revendications 1 à 3, **caractérisé en ce que** le conduit d'entrée (13) prévu pour les gaz d'échappement (15) débouche dans la trajectoire d'écoulement, dans le cas d'un seul conduit d'aspiration individuel (7).

5. Module d'aspiration de fluide de suralimentation (10, 20) selon l'une quelconque des revendications 1 à 4, **caractérisé en ce que** le conduit d'entrée (13) prévu pour les gaz d'échappement (15) présente un certain nombre d'ouvertures associées à chaque fois aux conduits d'aspiration individuels (7), ouvertures dont l'une, de préférence à chaque fois, débouche dans la trajectoire d'écoulement, dans le cas d'un seul conduit d'aspiration individuel (7).

6. Module d'aspiration de fluide de suralimentation (10, 20) selon l'une quelconque des revendications 1 à 5, **caractérisé en ce qu'**au moins deux ouvertures du conduit d'entrée (13) présentent des tailles et / ou des formes différentes, en particulier des tailles et / ou des formes qui sont réalisées de manière telle, que des gaz d'échappement (15) puissent être fournis en étant répartis de la même façon aux différents cylindres.

7. Module d'aspiration de fluide de suralimentation (10, 20) selon l'une quelconque des revendications 1 à 6, **caractérisé en ce qu'**un échangeur de chaleur (31) prévu pour les gaz d'échappement (15) est disposé dans le boîtier (1, 2), en particulier dans le conduit d'entrée (13) prévu pour les gaz d'échappement (15).

8. Module d'aspiration de fluide de suralimentation (10, 20) selon l'une quelconque des revendications 1 à 7, **caractérisé en ce que** l'échangeur de chaleur (11) prévu pour le fluide de suralimentation gazeux (5) et un échangeur de chaleur (31) prévu pour les gaz d'échappement (15) sont disposés dans un module d'échangeur de chaleur commun (33).

9. Module d'aspiration de fluide de suralimentation (10, 20) selon l'une quelconque des revendications 1 à 8, **caractérisé en ce que** le boîtier (1, 2) est formé comme une pièce moulée, en particulier comme une pièce moulée par injection, de préférence en matière plastique et / ou en aluminium.

10. Module d'aspiration de fluide de suralimentation (10, 20) selon l'une quelconque des revendications 1 à 9, **caractérisé en ce que** des conduits d'écoulement (27) du ou des échangeurs de chaleur (11, 31, 33) sont formés au moins partiellement comme une partie intégrée du boîtier (1, 2).

11. Module d'aspiration de fluide de suralimentation (10, 20) selon l'une quelconque des revendications 1 à 10, **caractérisé en ce que** le boîtier (1, 2) est formé comme un boîtier en plusieurs parties, en particulier comprenant une partie de boîtier distincte pour un conduit d'entrée collecteur (3) et une partie de boîtier distincte pour un conduit d'aspiration individuel (7).

12. Module d'aspiration de fluide de suralimentation (10, 20) selon l'une quelconque des revendications 1 à 11, **caractérisé en ce que** le boîtier (1, 2) est formé par une seule et même pièce.

13. Système de recyclage des gaz d'échappement, en particulier système de recyclage des gaz d'échappement à haute pression, comprenant un module d'aspiration de fluide de suralimentation (10, 20) selon l'une quelconque des revendications 1 à 12.

14. Moteur à combustion interne comprenant un module d' aspiration de fluide de suralimentation (10, 20) selon l'une quelconque des revendications 1 à 12.
